# EUROPÄISCHE PATENTANMELDUNG

(11) **EP 4 184 421 A1**
(43) Veröffentlichungstag der Anmeldung: **24.05.2023**
(21) Anmeldenummer: 21208805.8
(22) Anmeldetag: 17.11.2021
(51) Int. Cl.: G06Q 50/30, G06F 16/29, G06F 17/10, G06Q 10/06, G06F 17/18

(54) **ERMITTLUNG VON AUFSTELLORTEN FÜR LADESÄULEN FÜR ELEKTRISCHE FAHRZEUGE**

(71) Anmelder: Siemens Aktiengesellschaft, 80333 München (DE)
(72) Erfinder: Husarek, Dominik, 81543 München (DE); Metzger, Michael, 85570 Markt Schwaben (DE); Paulus, Simon, 81673 München (DE)
(74) Vertreter: Siemens Patent Attorneys

(57) **Zusammenfassung**

Es wird ein Verfahren zur Ermittlung eines oder mehrerer Aufstellorte (42) für eine beziehungsweise mehrere Ladesäulen für elektrische Fahrzeuge innerhalb eines räumlichen Gebiets (1), insbesondere eines Stadtgebiets, vorgeschlagen, das gekennzeichnet ist durch die folgenden Schritte:
- Bereitstellen mehrerer potentieller Aufstellorte (22, 42) für die Ladesäulen;
- Einteilen des Gebiets (1) in mehrere Rasterelemente (2, 4);
- Bestimmen eines Potentialwertes für jedes Rasterelement (2, 4) ;
- Ermitteln der Rasterelemente (4), deren Potentialwert größer oder gleich einem festgelegten Schwellenwert *ρ*₀ ist;
- Gewichten der potentiellen Aufstellorte *i* (42) mittels einer Gewichtung *wᵢ* für die ermittelten Rasterelemente (4); und
- Ermitteln der Aufstellorte (42) innerhalb des jeweiligen Rasterelements (4) dadurch, dass für diese *Pᵢ* = *wᵢ*/Σ*ⱼwⱼ* größer oder gleich einem festgelegten Schwellenwert *P*₀ ist.

Weiterhin betrifft die Erfindung ein Verfahren zum Aufstellen von Ladesäulen für elektrische Fahrzeuge an einem oder mehreren der ermittelten Aufstellorte.

## Beschreibung

Die Erfindung betrifft ein Verfahren gemäß dem Oberbegriff des Patentanspruches 1 sowie ein Verfahren gemäß dem Oberbegriff des Patentanspruches 13.

Durch die steigende Anzahl an elektrischen Fahrzeugen (Elektrofahrzeugen) werden zunehmend mehr Ladesäulen benötigt. Für die Platzierung beziehungsweise Installation solcher Ladesäulen stehen grundsätzlich, insbesondere innerhalb von Regionen oder Städten, eine unüberschaubare Vielzahl von potentiellen Standorten (Aufstellorte) zur Verfügung.

Aus dem Stand der Technik sind zwei verschiedene Ansätze zur Auswahl geeigneter Aufstellorte bekannt.

Zum einen erfolgt eine manuelle Platzierung, das heißt eine Auswahl mittels Ortskenntnisse oder manueller Internetabfrage, beispielsweise Google. Hierbei werden manuell interessante Standorte (englisch: Point of Interest; POI) identifiziert.

Zum anderen erfolgt die Auswahl beziehungsweise das Ermitteln der Aufstellorte mittels komplexer mathematischer Verfahren, beispielsweise mathematischer Optimierungsverfahren. Diese Verfahren sind typischerweise zeitintensiv und aufwendig.

Der vorliegenden Erfindung liegt die Aufgabe zugrunde, ein verbessertes Verfahren zur Ermittlung von Aufstellorten für Ladesäulen bereitzustellen.

Die Aufgabe wird durch ein Verfahren mit den Merkmalen des unabhängigen Patentanspruches 1 sowie durch ein Verfahren mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren zur Ermittlung eines oder mehrerer Aufstellorte für eine beziehungsweise mehrere Ladesäulen für elektrische Fahrzeuge innerhalb eines räumlichen Gebiets, insbesondere eines Stadtgebiets, ist gekennzeichnet durch die folgenden Schritte:
- Bereitstellen mehrerer potentieller Aufstellorte für die Ladesäulen;
- Einteilen des Gebiets in mehrere Rasterelemente;
- Bestimmen eines Potentialwertes für jedes Rasterelement;
- Ermitteln der Rasterelemente, deren Potentialwert größer oder gleich einem festgelegten Schwellenwert ***ρ*₀** ist;
- Gewichten der potentiellen Aufstellorte ***i*** mittels einer Gewichtung ***wᵢ*** für die ermittelten Rasterelemente; und
- Ermitteln der Aufstellorte innerhalb des jeweiligen Rasterelements dadurch, dass für diese ***Pᵢ*=*wᵢ*/*Σⱼwⱼ*** größer oder gleich einem festgelegten Schwellenwert ***P*₀** ist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Gemäß der vorliegenden Erfindung werden die Aufstellorte aus den potentiellen Aufstellorten ermittelt.

Hierbei werden in einem ersten Schritt des Verfahrens die potentiellen Aufstellorte, die grundsätzlich für das Aufstellen einer Ladesäule infrage kommen, bereitgestellt, beispielsweise in Form einer Datenbank. Die potentiellen Aufstellorte bilden die POIs aus.

In einem zweiten Schritt des Verfahrens wird das Gebiet, in welchem die Ladesäulen grundsätzlich angeordnet werden sollen, beispielsweise ein Stadtgebiet, in mehrere Rasterelemente eingeteilt. Mit anderen Worten wird über das Gebiet ein räumliches Raster gelegt (Rasterung). Die Rasterelemente bildet somit räumliche Segmente aus, die das Gebiet überdecken.

Anschließend wird in einem dritten Schritt des Verfahrens für jedes Rasterelement ein Potentialwert ermittelt. Der Potentialwert eines Rasterelements quantifiziert hierbei, wie vorteilhaft das Platzieren von Ladesäulen im genannten Rasterelement ist. Hierbei können die geographische Lage des Rasterelements, seine Infrastruktur und/oder die dortigen Gewerbe berücksichtigt werden. Besonders vorteilhaft ist es, den Potentialwert durch die Summe der im Rasterelement vorhandenen potentiellen Aufstellorte, das heißt durch ihre Anzahl, auszubilden. Je mehr potentielle Aufstellorte ein Rasterelement umfasst, desto höher ist somit sein Potentialwert.

In einem vierten Schritt des Verfahrens werden die Rasterelemente ermittelt, deren Potentialwert größer oder gleich einem festgelegten Schwellenwert ***ρ*₀** ist. Mit anderen Worten werden nicht alle Rasterelemente weiter betrachtet, sondern lediglich diejenigen, die ein vergleichsweises großes Potential aufweisen, das heißt einen Potentialwert ***ρ*≥*ρ*_{0·}** Hierbei ist ***ρ*₀** besonders bevorzugt eine minimale Anzahl von potentiellen Aufstellorten, die die ermittelten Rasterelemente aufweisen. Mit anderen Worten erfolgt somit eine Auswahl von im oben genannten Sinne interessanten/vorteilhaften Rasterelementen.

Gemäß einem fünften Schritt des Verfahrens werden die potentiellen Aufstellorte ***i*** mittels einer Gewichtung ***wᵢ*** für die ermittelten Rasterelemente gewichtet. Hierbei erfolgt die Gewichtung lediglich für die vorab ermittelten interessanten Rasterelemente. Dadurch ergibt sich eine Zeitersparnis, da nicht jedes Rasterelement weiterverfolgt wird. Mit anderen Worten werden die potentiellen Aufstellorte innerhalb der interessanten Rasterelemente gewichtet. Hierbei ist die Gewichtung größer oder gleich Null. Weiterhin kann eine normierte Gewichtung (Wert zwischen Null und Eins) oder eine nicht normierte Gewichtung (Wert größer oder gleich Null) verwendet werden. Die Gewichtung quantifiziert somit das Potential der Aufstellorte innerhalb eines ermittelten Rasterelements. Beispielsweise wird eine Tankstelle höher gewichtet als ein Wohngebäude.

In einem sechsten Schritt des Verfahrens werden die Aufstellorte innerhalb des jeweiligen Rasterelements dadurch ermittelt, dass für diesen ***Pᵢ*=*wᵢ*/*Σⱼwⱼ*** größer oder gleich einem festgelegten Schwellenwert ***P₀*** ist. Mit anderen Worten werden die Aufstellorte dadurch ermittelt, dass für diese die Wahrscheinlichkeit einer Platzierung (bezüglich der Gewichtung) größer oder gleich dem festgelegten Schwellenwert ***P₀*** ist. Hierbei beschreibt der Index ***j*** sinnbildlich ein Polygon innerhalb des zugehörigen Rasterelements. ***Pᵢ*** kann als Aufstellpotential des Aufstellortes ***i*** bezeichnet werden. Es werden somit gemäß der vorliegenden Erfindung gewichtete Rasterpolygone zur Ermittlung der Aufstellorte verwendet. Für eine normierte Gewichtung gilt ***Σⱼwⱼ* = 1,** ansonsten ist ***Σⱼwⱼ* > 0,** sodass **0 <** *Pᵢ* **≤ 1** ist.

Gemäß der vorliegenden Erfindung erfolgt somit eine zweifache Selektion. Zunächst werden interessante Rasterelemente im genannten Sinne ermittelt. Anschließend werden die Aufstellorte innerhalb der interessanten Rasterelemente gewichtet und nur diejenigen mit einer vergleichsweisen hohen Wahrscheinlichkeit beziehungsweise hohem Aufstellpotential (***Pᵢ*≥*P*₀**) als Aufstellorte festgelegt. Dadurch wird ein effizientes heuristisches Verfahren bereitgestellt, welches mit einem geringeren Zeitaufwand, beispielsweise im Vergleich zu mathematischen Optimierungsverfahren, vorteilhafte Aufstellorte bestimmt. Allerdings kann anschließend für die gemäß der vorliegenden Erfindung ermittelten Aufstellorte eine zusätzliche mathematische Optimierung zur weiteren Einschränkung der Aufstellorte erfolgen. Mit anderen Worten können die ermittelten Aufstellorte als Startlösung für eine anschließende mathematische Optimierung verwendet werden.

Die vorliegende Erfindung stellt somit ein schnelles, automatisiertes und effizientes Verfahren zur Ermittlung von Aufstellorten von Ladesäulen bereit. Dadurch ergeben sich Zeit-und Kostenvorteile. Weiterhin sind für das vorliegende Verfahren, im Gegensatz zu komplexen Optimierungsverfahren, keine Mobilitätsdaten, erforderlich. Diese sind für jedes Land, für jede Region, für jede Stadt unterschiedlich, sodass das vorliegende Verfahren eine Ermittlung der Aufstellorte für beliebige Länder, Regionen und/oder Städte ermöglicht. Allerdings können zusätzlich solche Mobilitätsdaten zur Verbesserung verwendet werden. Beispielsweise werden hierbei die Mobilitätsdaten durch Open Street Maps bereitgestellt.

Die vorliegende Erfindung ermöglicht somit mit anderen Worten eine schnellere Ermittlung von Aufstellorten für Ladesäulen, die im Gegensatz zu bisherigen Verfahren unabhängig von manuellen Eingaben ist. Hierbei kann eine erste Startlösung für die Aufstellorte bereitgestellt werden, welche eine erste technisch sinnvolle Auswahl ausbildet und/oder bei weiteren aufwendigeren Optimierungsverfahren verwendet werden kann. Besonders durch den dadurch reduzierten Zeitaufwand beziehungsweise die verkürzte Rechenzeit können Aufwand und Kosten reduziert werden. Hierbei können weitere Daten zur Verbesserung der Performance des vorliegenden Verfahrens verwendet werden. Falls diese Daten nicht vorhanden sind, kann eine kontinuierlich wachsende Datenbank mit Messwerten Rückschlüsse auf das Mobilitätsverhalten verschiedener geclusterter Polygone oder einzelner kategorisierter Datenpunkte zulassen. Die vorliegende Erfindung ermöglicht somit eine Platzierung in jeder beliebigen Region weltweit auf Basis öffentlich zugänglicher Daten, wie beispielsweis Open Street Maps.

Das weitere erfindungsgemäßen Verfahren zum Aufstellen von Ladesäulen für elektrische Fahrzeuge an einem oder mehreren Aufstellorten innerhalb eines räumlichen Gebiets, insbesondere eines Stadtgebiets, ist gekennzeichnet dadurch, dass die Aufstellorte durch ein Verfahren gemäß der vorliegenden Erfindung und/oder einer ihrer Ausgestaltungen ermittelt werden.

Dadurch werden erfindungsgemäß die Ladesäule an den ermittelten Aufstellorten installiert.

Es ergeben sich zum erfindungsgemäßen Verfahren zur Ermittlung der Aufstellorte gleichwertige und gleichwirkende Vorteile und/oder Ausgestaltungen.

Gemäß einer vorteilhaften Ausgestaltung der Erfindung wird der Potentialwert eines Rasterelements durch die Anzahl der potentiellen Aufstellorte innerhalb des genannten Rasterelements ermittelt.

Mit anderen Worten nimmt der Potentialwert eines Rasterelements proportional zu der Anzahl der potentiellen Aufstellorte (POIs) innerhalb des Rasterelements zu. Weist beispielsweise das Rasterelement N potentielle Aufstellorte auf, so ist sein Potentialwert N. Dadurch werden vorteilhafterweise Rasterelemente mit mehreren POIs höher eingestuft, sodass das grundsätzliche Potential innerhalb diesem Rasterelement eine Ladesäule zu installieren größer ist. Weitere Potentialwerte können vorgesehen sein. Beispielsweise kann berücksichtigt werden, dass das Rasterelement bereits Ladesäulen aufweist. Das ist deshalb vorteilhaft, damit ein Rasterelement nicht überbestückt mit Ladesäulen wird. Hierbei ist es ebenfalls vorteilhaft, den Abstand zwischen den bereits installierten Ladensäulen innerhalb des Rasterelements zu berücksichtigen. Mit anderen Worten sollten Ladesäulen nicht zu nahe beieinander angeordnet werden. Dies kann durch eine Korrektur des Potentialwertes, beispielsweise durch eine Subtraktion der bereits vorhanden Ladesäulen und/oder einem gewichteten Potentialwert sichergestellt werden.

In einer vorteilhaften Weiterbildung der Erfindung wird der Schwellenwert des Potentialwertes durch ***ρ*₀ = 1, *ρ*₀ = 3, *ρ*₀ = 5** oder ***ρ*₀ = 10** festgelegt.

Besonders bevorzugt wird somit ein Rasterelement ermittelt beziehungsweise ausgewählt, wenn das Rasterelement wenigstens einen POI, wenigstes drei POIs, wenigstens fünf POIs oder wenigstens zehn POIs aufweist. Dadurch werden vorteilhafterweise nicht alle möglichen Rasterelemente betrachtet und ausgewertet, sondern eine erste heuristische Auswahl getroffen, sodass dadurch die Rechenzeit verkürzt wird.

Gemäß einer vorteilhaften Ausgestaltung der Erfindung wird der Schwellenwert für das Aufstellpotential *Pᵢ* = *wᵢ*/*Σⱼwⱼ* durch ***P*₀ = 0.5, *P*₀ = 0.68, *P₀* = 0.95** oder ***P₀ =* 0.997** festgelegt.

Mit anderen Worten werden schließlich die Aufstellorte ermittelt, deren Aufstellpotential größer als 0.5, größer als 0.68, größer als 0.95 oder größer als 0.997 ist. Hierbei entspricht der Wert 0.68 vorteilhafterweise im Wesentlichen dem 1-sigma Intervall einer Normalverteilung, der Wert 0.95 vorteilhafterweise im Wesentlichen dem 2-sigma Intervall einer Normalverteilung und der Wert 0.997 vorteilhafterweise im Wesentlichen dem 3-sigma Intervall einer Normalverteilung.

In einer vorteilhaften Weiterbildung der Erfindung werden die Gewichtungen ***wᵢ*** der potentiellen Aufstellorte in Abhängigkeit eines am jeweiligen Aufstellort vorhandenen Gewerbes festgelegt.

Mit anderen Worten können die Gewichtungen gemäß der Art eines am Aufstellort beziehungsweise in dessen Nähe angeordneten Gewerbes festgelegt werden. Beispielsweise wird ein Aufstellort an einer Tankstelle höher gewichtet als ein Aufstellort an einem Wohngebäude.

Hierbei wird besonders bevorzugt ***wᵢ* = 4** für Tankstellen, ***wᵢ* = 3** für Einkaufszentren, ***wᵢ* = 2** für Gaststätten und ***wᵢ* = 1** für Bäckereien festgelegt. Weitere Gewichtungen beziehungsweise Werte können weiteren Gewerben zugeordnet werden.

Gemäß einer vorteilhaften Ausgestaltung der Erfindung werden die Gewichtungen ***wᵢ*** der potentiellen Aufstellorte in Abhängigkeit der Anzahl der innerhalb des Rasterelementes bereits vorhandenen Ladesäulen und/oder in Abhängigkeit der Entfernungen zwischen den potentiellen Aufstellorten festgelegt.

Dadurch wird das vorliegende grundsätzlich zweistufige Verfahren, das heißt die Ermittlung der interessanten Rasterelemente über ihren Potentialwert und die anschließende Ermittlung der Aufstellorte mittels der Gewichtung der Aufstellorte innerhalb der ermittelten Rasterelemente, verbessert. Insbesondere wird eine Clusterung von zu vielen Ladesäulen innerhalb eines Rasterelements vermieden. Mit anderen Worten ermöglichen die genannten weiteren Restriktionen eine vorteilhafte Verteilung der Ladesäulen beziehungsweise der Aufstellorte über die ermittelten Rasterelemente.

In einer vorteilhaften Weiterbildung der Erfindung werden rechteckförmige Rasterelemente verwendet.

Dadurch wird die Effizienz des Verfahrens, insbesondere im Hinblick auf seine Rechenzeit, verbessert. Eine Rasterung gemäß Rechtecken kann zudem schnell und effizient implementiert werden.

Hierbei ist es besonders bevorzugt, wenn quadratische Rasterelemente verwendet werden, die eine Seitlänge größer gleich 100 Metern oder größer gleich 150 Metern, besonders bevorzugt von 150 Metern, aufweisen.

Dadurch ist die Größe beziehungsweise Auflösung der Rasterung an urbane Strukturen angepasst. Weiterhin können kleinere Auflösungen als 100 Meter verwendet werden, falls die urbanen Strukturen stärker variieren. Mit anderen Worten ist es vorteilhaft, wenn die Rasterung beziehungsweise deren Größe/Auflösung an das betrachtete Gebiet angepasst werden. So ist es vorteilhaft für ländlich geprägte Gebiete eine größere Rasterung als für städtisch geprägte Gebiete zu verwenden. Für Mischgebiete, die sowohl ländlich als auch städtisch geprägt sind, ist weiterhin eine dynamische Rasterung, das heißt eine unterschiedliche Rasterung je nach Ort innerhalb des Gebiets vorteilhaft.

Gemäß einer vorteilhaften Ausgestaltung der Erfindung werden zum Bereitstellen der potentiellen Aufstellorte diese durch Infrastrukturdaten des Gebiets ermittelt.

Mit anderen Worten werden die POIs durch Infrastrukturdaten, beispielsweise einem vorliegenden Datensatz, ermittelt. Dadurch können besonders vorteilhafte POIs ermittelt werden.

Hierbei ist es weiterhin von Vorteil, wenn Verkehrsflussdaten, Mobilitätsstatistiken, Bewegungsprofile, Lademanagementdaten und/oder Messdaten zum Ermitteln der potentiellen Aufstellorte verwendet werden.

Dadurch wird die Ermittlung der Aufstellorte weiter verbessert. Das ist deshalb der Fall, da die genannten weiteren Daten, wie beispielsweise Verkehrsflussdaten (dynamisch), Mobilitätsstatistiken, Bewegungsprofile und Messdaten aus anderen Regionen, beispielsweise aus eCar OC, aus weiteren Mobilitätsprojekten sowie aus weltweit öffentlich zugänglichen Datenbanken zur automatisierten Verbesserung der Qualität der gewichteten Datenpunkte verwendet werden können. Besonders die Integration von Messdaten einer kontinuierlich wachsenden Datenbank, beispielsweise Systemen zum Lademanagement, wie eCar OC, über Verfahren des maschinellen Lernens lernende Algorithmen können eine stetige wachsende Qualität der Datenpunkte ermöglichen.

In einer vorteilhaften Weiterbildung der Erfindung werden die genannten Daten durch neuere Daten aktualisiert und/oder ergänzt werden, wobei hierzu Verfahren des maschinellen Lernens verwendet werden.

Ergänzend können Methoden des unüberwachten Lernens, wie Verfahren der partitionierenden oder hierarchischen Clusteranalyse, die eine Generalisierung von existierender Ladeinfrastruktur auf die zu analysierende Region erlauben, verwendet werden. Die POIs können somit mittels einer kontinuierlich wachsenden Datenbank bezüglich ihrer Relevanz automatisiert geclustert und gewichtet werden. Zudem können Messdaten bei dieser wachsenden Datenbank zur verbesserten Ermittlung und somit zur verbesserten Platzierung der Ladesäulen beitragen. Eine weitere algorithmische Kategorisierung der Polygone der POIs in Abhängigkeit der dortigen Datenpunkte kann für Vergleiche mit Polygonen des gleichen Clusters aus einer Region mit bereits ausgerollter Ladeinfrastruktur, und damit gegebenenfalls mit vorhandenen Messdaten, herangezogen werden.

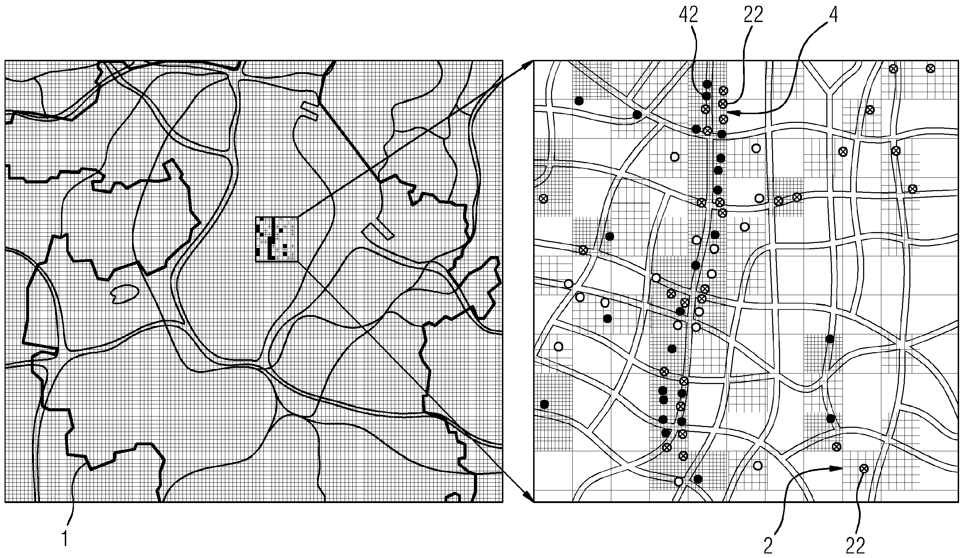

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert eine Rasterung sowie zugehörige Potentialwerte gemäß einer Ausgestaltung der vorliegenden Erfindung.

Gleichartige, gleichwertige oder gleichwirkende Elemente können in der Figur mit denselben Bezugszeichen versehen sein.

Die Figur zeigt als ein Gebiet ein Stadtgebiet 1. Das Stadtgebiet 1 weist eine Rasterung mit mehreren Rasterelementen 2, 4 auf. Gemäß dem vorliegenden Ausführungsbeispiel weisen die Rasterelemente 2, 4 beziehungsweise Rastersegmente eine Größe von 150 Meter mal 150 Meter auf. Diese sind somit vorliegend quadratisch. Aus Übersichtsgründen sind exemplarisch lediglich zwei der Rastersegmente mit einem Bezugszeichen gekennzeichnet.

Weiterhin zeigt die Figur exemplarisch eine Vergrößerung eines Teilgebiets des Stadtgebiets 1, insbesondere einen Teil der Stadtmitte. Hierbei sind die Rastersegmente 2, 4 verschieden schraffiert. Die verschiedene Schraffierung zeigt die verschiedenen Potentialwerte der Rastersegmente 2, 4 an. Beispielsweise weist das Rastersegment 2 einen kleineren Potentialwert als das Rastersegment 4 auf. Vorliegend wird der Potentialwert eines Rastersegments 2, 4 durch die Anzahl seiner potentiellen Aufstellorte (POIs) ermittelt. Mit anderen Worten weist das Rastersegment 4 somit mehr POIs als das Rastersegment 2 auf. Die POIs, die potentiellen Aufstellorten für Ladesäulen entsprechen, sind mit dem Bezugszeichen 22 gekennzeichnet. Wiederum ist aus Übersichtsgründen lediglich ein potentieller Aufstellort 22 im Rasterelement 2 sowie zwei potentielle Aufstellorte 22, 42 im Rasterelement 4 gekennzeichnet.

Vorliegend weist das Rasterelement 2 zwei potentielle Aufstellorte und das Rasterelement 4 acht potentielle Aufstellorte auf. Der Potentialwert des Rasterelements 2 ist somit 2. Der Potentialwert des Rasterelements 4 ist somit 8. Wird somit der Schwellenwert für den Potentialwert beispielsweise als 4 festgelegt, so wird im weiteren Verfahren lediglich das Rasterelement 4 betrachtet, da gemäß der vorliegenden Erfindung die Rasterelemente ermittelt werden, deren Potentialwert oberhalb des festgelegten Schwellenwertes liegt.

Anschließend werden die potentiellen Aufstellorte 22 der dadurch ermittelten Rasterelemente 4 gewichtet, beispielsweise nach der Art eines Gewerbes, an dem sich der potentielle Aufstellort 22 befindet. Die verschiedenen Gewichtungen sind innerhalb des Rasterelements 4 wiederum durch verschiedene Schraffierungen gekennzeichnet. Hierbei weist der potentielle Aufstellort 22 innerhalb des Rasterelements 4 eine kleinere Gewichtung als der potentielle Aufstellort 42 auf. Liegt lediglich die Gewichtung des potentiellen Aufstellort 42 oberhalb des Schwellwertes, so wird lediglich dieser potentielle Aufstellort 42 als Aufstellort ermittelt. Somit kann die Ladesäule am ermittelten Aufstellort 42 innerhalb des Rasterelements 4 installiert beziehungsweise platziert werden.

Die Ermittlung der Rasterelemente mittels ihres Potentialwertes sowie die Ermittlung der Aufstellorte mittels der Gewichtung der Aufstellorte innerhalb der vorteilhaften beziehungsweise interessanten Rasterelemente bildet somit einen vorteilhaften Aufstellort für die Platzierung der Ladesäule aus.

Somit stellt die vorliegende Ausgestaltung der vorliegenden Erfindung vorteilhafte Aufstellorte ohne größeren Modellierungsaufwand, wie beispielsweise Optimierungsverfahren, bereit.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Gebiet
- 2: Rasterelement
- 4: Rasterelement
- 22: potentieller Aufstellort
- 42: Aufstellort

## Patentansprüche

1. Verfahren zur Ermittlung eines oder mehrerer Aufstellorte (42) für eine beziehungsweise mehrere Ladesäulen für elektrische Fahrzeuge innerhalb eines räumlichen Gebiets (1), insbesondere eines Stadtgebiets, **gekennzeichnet durch** die Schritte:
- Bereitstellen mehrerer potentieller Aufstellorte (22, 42) für die Ladesäulen;
- Einteilen des Gebiets (1) in mehrere Rasterelemente (2, 4);
- Bestimmen eines Potentialwertes für jedes Rasterelement (2, 4) ;
- Ermitteln der Rasterelemente (4), deren Potentialwert größer oder gleich einem festgelegten Schwellenwert ***ρ*₀** ist;
- Gewichten der potentiellen Aufstellorte ***i*** (42) mittels einer Gewichtung ***wᵢ*** für die ermittelten Rasterelemente (4); und
- Ermitteln der Aufstellorte (42) innerhalb des jeweiligen Rasterelements (4) **dadurch, dass** für diese ***Pᵢ* = *wᵢ*/*Σⱼwⱼ*** größer oder gleich einem festgelegten Schwellenwert ***P₀*** ist.

2. Verfahren gemäß Anspruch 1, **gekennzeichnet dadurch, dass** der Potentialwert eines Rasterelements (2, 4) durch die Anzahl der potentiellen Aufstellorte (22, 42) innerhalb des genannten Rasterelements (2, 4) ermittelt wird.

3. Verfahren gemäß Anspruch 1 oder 2, **gekennzeichnet dadurch, dass *ρ*₀ =1, *ρ*₀ = 3, *ρ*₀ = 5** oder ***ρ*₀ =10** festgelegt wird.

4. Verfahren gemäß einem der vorhergehenden Ansprüche, **gekennzeichnet dadurch, dass *P*₀ = 0.5,** *P*₀ **= 0.68, *P*₀ = 0.95** oder ***P*₀** = **0.997** festgelegt wird.

5. Verfahren gemäß einem der vorhergehenden Ansprüche, **gekennzeichnet dadurch, dass** die Gewichtungen ***wᵢ*** der potentiellen Aufstellorte (22, 42) in Abhängigkeit eines am jeweiligen Aufstellort (22, 42) vorhandenen Gewerbe festgelegt werden.

6. Verfahren gemäß Anspruch 5, **gekennzeichnet dadurch, dass *wᵢ*=4** für Tankstellen, ***wᵢ*=3** für Einkaufszentren, ***wᵢ*=2** für Gaststätten und ***wᵢ*=1** für Bäckereien festgelegt wird.

7. Verfahren gemäß einem der vorhergehenden Ansprüche, **gekennzeichnet dadurch, dass** die Gewichtungen wᵢ der potentiellen Aufstellorte (22, 42) in Abhängigkeit der Anzahl der innerhalb des Rasterelementes (2, 4) bereits vorhandenen Ladesäulen und/oder in Abhängigkeit der Entfernungen zwischen den potentiellen Aufstellorten (2, 4) festgelegt werden.

8. Verfahren gemäß einem der vorhergehenden Ansprüche, **gekennzeichnet dadurch, dass** rechteckförmige Rasterelemente (2, 4) verwendet werden.

9. Verfahren gemäß Anspruch 8, **gekennzeichnet dadurch, dass** quadratische Rasterelemente (2, 4) verwendet werden, die eine Seitlänge größer gleich 100 Metern oder größer gleich 150 Metern, besonders bevorzugt von 150 Metern, aufweisen.

10. Verfahren gemäß einem der vorhergehenden Ansprüche, **gekennzeichnet dadurch, dass** zum Bereitstellen der potentiellen Aufstellorte (22, 42) diese durch Infrastrukturdaten des Gebiets (1) ermittelt werden.

11. Verfahren gemäß Anspruch 10, **gekennzeichnet dadurch, dass** weiterhin Verkehrsflussdaten, Mobilitätsstatistiken, Bewegungsprofile, Lademanagementdaten und/oder Messdaten zum Ermitteln der potentiellen Aufstellorte (22, 42) verwendet werden.

12. Verfahren gemäß Anspruch 10 oder 11, **gekennzeichnet dadurch, dass** die genannten Daten durch neuere Daten aktualisiert und/oder ergänzt werden, wobei hierzu Verfahren des maschinellen Lernens verwendet werden.

13. Verfahren zum Aufstellen von Ladesäulen für elektrische Fahrzeuge an einem oder mehreren Aufstellorten (42) innerhalb eines räumlichen Gebiets (1), insbesondere eines Stadtgebiets, **gekennzeichnet dadurch, dass** die Aufstellorte (42) durch ein Verfahren gemäß einem der vorhergehenden Ansprüche ermittelt werden.
